Europäisches Patentamt

European Patent Office

Office européen des brevets

(19)

(11) Veröffentlichungsnummer : **0 144 660**
**B1**

(12) **EUROPÄISCHE PATENTSCHRIFT**

(45) Veröffentlichungstag der Patentschrift :
25.05.88

(21) Anmeldenummer : 84112619.6

(22) Anmeldetag : 19.10.84

(51) Int. Cl.⁴ : **H 02 H   5/08**, H 01 H 61/04,
H 01 H 35/42

(54) **Elektrisches Anschlussgerät, wie Steckdose, für elektrische Verbraucher.**

(30) Priorität : 26.10.83 DE 3338819

(43) Veröffentlichungstag der Anmeldung :
19.06.85 Patentblatt 85/25

(45) Bekanntmachung des Hinweises auf die Patenterteilung : 25.05.88 Patentblatt 88/21

(84) Benannte Vertragsstaaten :
CH FR GB IT LI

(56) Entgegenhaltungen :
EP-A- 0 088 390
DE-A- 2 220 264
DE-A- 2 631 785
US-A- 2 683 201

(73) Patentinhaber : ROBERT KRUPS STIFTUNG & CO.
KG.
Heresbachstrasse 29
D-5650 Solingen 19 (DE)

(72) Erfinder : Mahlich, Gotthard Ch., Dipl.-Ing.
Auf dem Kämpchen 22
D-5650 Solingen 11 (DE)
Erfinder : Storsberg, Gregor
Hossenhauserstrasse 40
D-5650 Solingen 1 (DE)
Erfinder : Vogelsang, Bernd
Mühlendamm 38
D-5650 Solingen 25 (DE)

(74) Vertreter : Buse, Karl Georg; Dipl.-Phys. et al
Patentanwälte Dipl.-Phys. Buse Dipl.-Phys. Mentzel
Dipl.-Ing. Ludewig Unterdörnen 114
D-5600 Wuppertal 2 (DE)

**0 144 660**

**Beschreibung**

Die Erfindung bezieht sich auf ein elektrisches Anschlußgerät mit Versorgungsleitungen für elektrische ·Verbraucher, wie eine Steckdose, einen Mehrfachsteckanschluß, einen Anschlußverteiler, einen Zwischenstecker od. dgl. mit einem Schutzschalter, dessen mechanische Kontakte zwischen einer Ein- und Ausschaltstellung beweglich sind, mit einem Sensor zur Überwachung des Eindringens von Flüssigkeit in den Verbraucher, wobei der Sensor aus einem offenen elektrischen Doppelleiter besteht, der bei der bestimmungsgemäßen Handhabung des Verbrauchers und gegebenenfalls des Anschlußgerätes in unzugänglichen Randbereichen von Gehäuseöffnungen und Gehäusefugen der zugehörigen Gehäuse angeordnet ist und der bei Benetzung mit eindringender Flüssigkeit seinen elektrischen Scheinwiderstand verändert, und mit einer im Anschlußgerät enthaltenen Schutzschaltung, die das Öffnen der Kontakte des Schutzschalters bewirkt, wenn das Eindringen von Flüssigkeit durch den Sensor erfaßt wird.

Die DE-A-2 631 785 beschreibt ein elektrisches Anschlußgerät (Hilfssteuergerät mit Netzstecker) mit Versorgungsleitungen für einen elektrischen Verbraucher mit einem Schutzschalter, dessen mechanische Kontakte zwischen einer Ein- und Ausstellung beweglich sind, mit einem Sensor zur Überwachung des Eindringens von Flüssigkeit in den Verbraucher, wobei der Sensor aus einem offenen elektrischen Doppelleiter besteht, der bei der bestimmungsgemäßen Handbahung des Verbrauchers und des Anschlußgerätes in unzugänglichen Randbereichen von Gehäuseöffnungen der zugehörigen Gehäuse angeordnet ist und der bei Benetzung mit eindringender Flüssigkeit (Wasser) seinen elektrischen Scheinwiderstand verändert, und mit einer im Anschlußgerät enthaltenen Schutzschaltung, die das bleibende Öffnen der Kontakte des Schutzschalters bewirkt, wenn das Eindringen von Flüssigkeit durch den Sensor erfaßt wird.

Ferner ist durch die EP-A1-0 088 390 eine Schutzeinrichtung für elektrische Verbraucher mit einem Schutzschalter bekanntgeworden, dessen mechanische Kontakte zwischen einer Ein- und Ausschaltstellung beweglich sind, mit einem Sensor zur Überwachung des Eindringens von Flüssigkeit in den Verbraucher, wobei der Sensor aus einem offenen elektrischen Doppelleiter besteht, der bei der bestimmungsgemäßen Handhabung des Verbrauchers in unzugänglichen Randbereichen von Gehäuseöffnungen und Gehäusefugen der zugehörigen Gehäuse angeordnet ist und der bei Benetzung mit eindringender Flüssigkeit seinen elektrischen Scheinwiderstand verändert und mit einer Schutzschaltung. Dabei sind der Schutzschalter und die Schutzschaltung derart ausgelegt, daß in Einschaltstellung des Schutzschalters dessen bewegliche Kontakte zwar stets einen vorgespannten, sie selbstätig in Ausschaltstellung überführenden Triebmittel ausgesetzt sind, aber diese Bewegung des Triebmittels durch einen schmelzfähigen Werkstoff gehemmt ist. Der schmelzfähige Werkstoff ist dabei im Bereich eines elektrisch aufheizbaren Gliedes (Heizglied) einer an die Versorgungsleitungen angeschlossenen, einen Halbleiterschalter aufweisenden Zündschaltung angeordnet, an deren Eingang der Doppelleiter liegt und welche den Halbleiterschalter dann zündet, wenn der elektrische Scheinwiderstand des Doppelleiters einen bestimmten, auf eine Flüssigkeitsbenetzung zurückzuführenden Grenzwert unterschreitet.

Das Triebmittel dieses bekannten Schutzschalters besteht aus einer Federvorspannung der beweglichen Kontakte, welche bei Auslösung die Kontakte in Ausschaltstellung treibt.

Der schmelzfähige Werkstoff kann ein den elektrischen .Strom leitender Draht sein, der das elektrische Heizglied in der Zündschaltung selbst bildet und im Falle der Zündung über seine Schmelztemperatur hinaus erwärmbar ist oder aber ein Kleber sein, der das Triebmittel mit dem elektrischen Heizglied verbindet und mittelbar durch den Stromfluß im Heizglied über seine Schmelztemperatur hinaus erwärmbar ist.

Die bisher bekannten elektrischen Anschlußgeräte der genannten Art lösen zwar die ihr zugedachte Aufgabe, den Benutzer des elektrischen Anschlußgerätes durch auftretende Schäden zu schützen. Mit ihnen ist aber nicht die Möglichkeit gegeben, zu überprüfen, ob das Anschlußgerät voll wirksam ist, ohne daß dabei der Schutzschalter bleibend zerstört wird.

Der Erfindung liegt die Aufgabe zugrunde, ein Anschlußgerät der im Gattungsbegriff genannten Art zu entwickeln, das beim Eindringen von leitenden Flüssigkeiten, wie z. B. Wasser, in den Verbraucher zuverlässig und so schnell anspricht, daß eine Unfallgefahr für damit in Berührung kommende Personen mit Sicherheit ausgeschlossen ist. Ferner soll die Möglichkeit geschaffen werden, das Anschlußgerät auf seine wolle Wirksamkeit überprüfen zu können, ohne den Schutzschalter auslösen zu müssen.

Dies wird erfindungsgemäß durch die im Kennzeichen des Anspruches 1 angeführten Maßnahmen erreicht. Weil sich der Sensor als offener elektrischer Doppelleiter an all jenen Stellen des Gerätegehäuses befindet, an denen zuerst die eindringende Flüssigkeit auftritt, wird eine sehr schnelle Reaktion erreicht. Die Abschaltung des Gerätes erfolgt, noch ehe die Flüssigkeit zu den stromführenden Teilen gelangt. Dafür sind sie stets in Richtung des Ausschaltstellung hin vorgespannten Triebmittel zur Bewegung der Kontakte ebenso bedeutsam wie der diese Triebmittel in Einschaltstellung hemmende schmelzfähige Werkstoff. Die Zündschaltung heizt mittelbar oder unmittelbar den schmelzfähigen Werkstoff nach wenigen Millise-kunden bereits über die Schmelztemperatur aus und löst die Ausschaltbewegung des Triebmittels aus.

2

Von besonderer Bedeutung ist es, daß das Anschlußgerät auf seine volle Wirksamkeit überprüft werden kann, ohne dabei den Schutzschalter auslösen zu müssen. Eine derartige Kontrolle ist in bequemer und zuverlässiger Weise in der Weise möglich, daß man am Eingang der Zündschaltung einen Testschalter vorsieht und diesen mit einem in der Versorgungsleitung liegenden Hauptschalter koppelt. Im Testfall schließt zwar der Testschalter den Eingang der Zündschaltung kurz, doch wird vorausgehend der damit gekoppelte Hauptschalter die zur Zündschaltung und gegebenenfalls zum elektrischen Verbraucher führende Versorgungsleitung unterbrechen und statt dessen Begrenzungwiderstände in einer parallel mit der unterbrochenen Versorgungsleitung zur Zündschaltung führenden Hilfsleitung einschalten. Ein Schmelzen des schmelzfähigen Werkstoffes wird jetzt verhindert, denn durch die Begrenzungswiderstände wird der Heizstrom reduziert. Dieser in definierter Höhe anfallende Heizstrom setzt außerdem eine Kontrollanzeige in Gang, welche die volle Funktionsfähigkeit aller elektrischen Bauteile des Schutzschalters aufzeigt. Eine solche Kontrollanzeige kann z. B. aus einer Kontrollampe bestehen, die bei Betätigung des Testschalters aufleuchtet und die volle Schutzwirkung des Gerätes dokumentiert.

Der schmelzfähige Werkstoff, der die genannte Bewegung der Triebmittel hemmt, kann, als leitender Werkstoff, ein den elektrischen Strom führender Draht sein, der als elektrisches Heizglied in die Zündschaltung selbst eingebaut ist und im Falle der Zündung über seine Schmelztemperatur hinaus erwärmt wird. Alternativ besteht aber auch die Möglichkeit, den schmelzfähigen Werkstoff als Kleber zu verwenden, der das Klebmittel, z. B. den isolierenden Trennkeil in seiner Ruhelage mit einem elektrischen Heizglied verbindet und durch dessen Erwärmung im Zündungsfall mittelbar über seine Schmelztemperatur hinaus erwärmt wird.

Es existiert die EP-A2-0 139 301 mit gleichem Prioritätsdatum und ähnlichem Inhalt desselben Anmelders.

In den Zeichnungen ist die Erfindung in einem Ausführungsbeispiel dargestellt. Es zeigen :

Fig. 1 und 2 die Draufsicht und Seitenansicht eines nach der Erfindung gestalteten Anschlußgeräts, nämlich einer Mehrfachsteckleiste,

Fig. 3 und 4 in Draufsicht und Schnittansicht längs der Schnittlinie IV-IV des einen Betätiger aufweisenden Bereiches des Anschlußgeräts von Fig. 1 bzw. 2,

Fig. 5 schematisch einen zur erfindungsgemäßen Zündschaltung gehörenden selbstöffnenden Schalter in Schnittansicht, wobei die Schnittführung aus der Schnittlinie V-V von Fig. 6 zu erkennen ist, und zwar in Einschaltstellung des Schalters,

Fig. 6 eine schematische Draufsicht auf den Schalter von Fig. 5 in Einschaltstellung,

Fig. 7 eine der Fig. 5 entsprechende Schnittansicht des Schalters, wobei sich aber seine Kontakte in Ausschaltstellung befinden und

Fig. 8 eine beim erfindungsgemäßen Anschlußgerät verwendete Schutzschaltung.

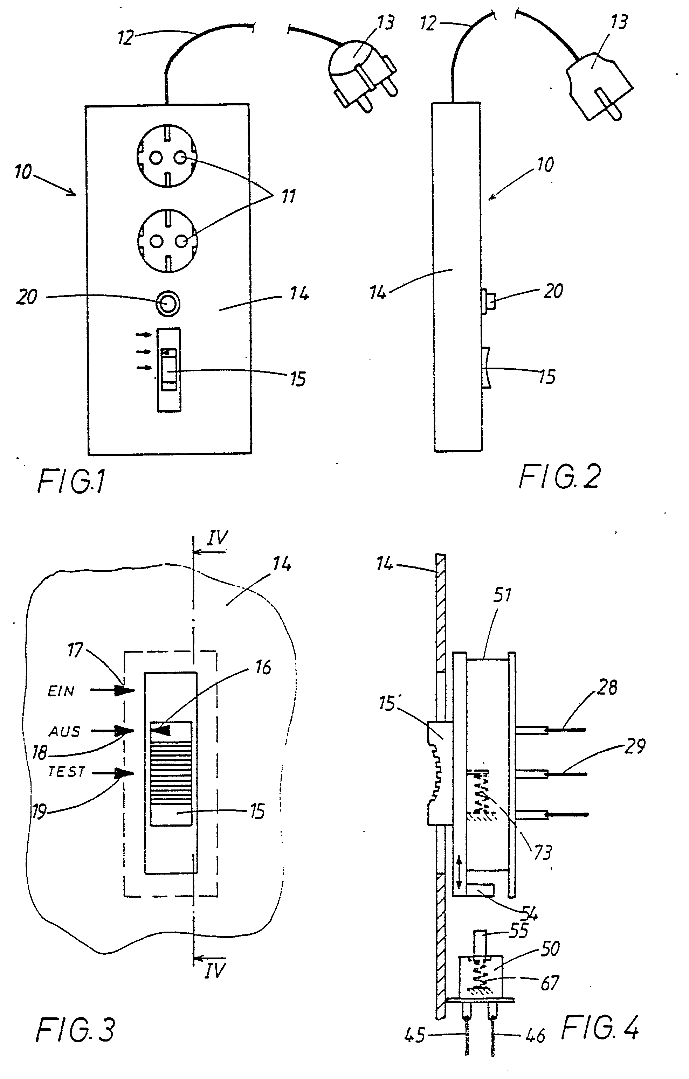

Das erfindungsgemäße Anschlußgerät ist in Fig. 1 und 2 als Mehrfachsteckleiste 10 ausgebildet, die mehrere Steckaufnahmen 11 für die Stecker nicht mehr gezeigter elektrischer Verbraucher aufweist und über eine Anschlußleitung 12 und einen Stecker 13 an eine Stromquelle anschließbar ist. Außen am Gehäuse 14 des Geräts 10 befindet sich eine Handhabe 15, die mit Hilfe einer Marke 16 zwischen drei ihrerseits durch Gegenmarken 17, 18, 19 gekennzeichnete Arbeitspositionen verstellbar ist. Am Gehäuse 14 befindet sich noch eine Kontroll-Lampe 20, die in der einen Arbeitsstellung 19 dann aufleuchtet, wenn die volle Funktionsfähigkeit aller maßgeblichen elektrischen Bauteile vorliegt, wie noch näher beschrieben werden wird.

Im Gehäuseinneren 14 befindet sich innerhalb einer durch die Strichpunktlinie 21 angedeuteten wasserdichten Kapselung die erfindungsgemäße Schutzschaltung 72. Die aus der erwähnten Anschlußleitung 12 kommenden, untereinander vertauschbaren Netzanschlüsse 22, 23 sind in die Kapselung 21 mit einbezogen und gehen über die beweglichen bzw. ruhenden Kontakte 25, 27 bzw. 24, 26 eines selbstöffnenden mechanischen Schalters 31 in Versorgungsleitungen 28, 29 über, an welche die zu den diversen Steckaufnahmen 11 gehörenden Aufnahmekontakte 30 außerhalb der Kapselung 21 angeschlossen sind. Diese Kontakte 24 bis 27 befinden sich an der Eingangsseite der Schaltung 72, so daß beim Öffnen des Schalters 31 sowohl die Schutzschaltung als auch der an den Steckaufnahmen 11 angeschlossene elektrischen Verbraucher vollkommen spannungsfrei sind. Die Schutzschaltung mit ihren Bauelementen ist zweckmäßigerweise auf einer Leiterplatte aufgebracht. Die Schaltung umfaßt eine Brücke mit Dioden 32, 33, 34, 35, in deren Diagonale nach einem Vorwiderstand 36 ein aus einem schmelzfähigen Draht 37 bestehendes Widerstandselement und ein Thyristor 38 mit dazu parallel geschaltetem Schutzkondensator 58 angeordnet sind. Der Schutzkondensator 58 verhindert ein Überkopfzünden des Thyristors.

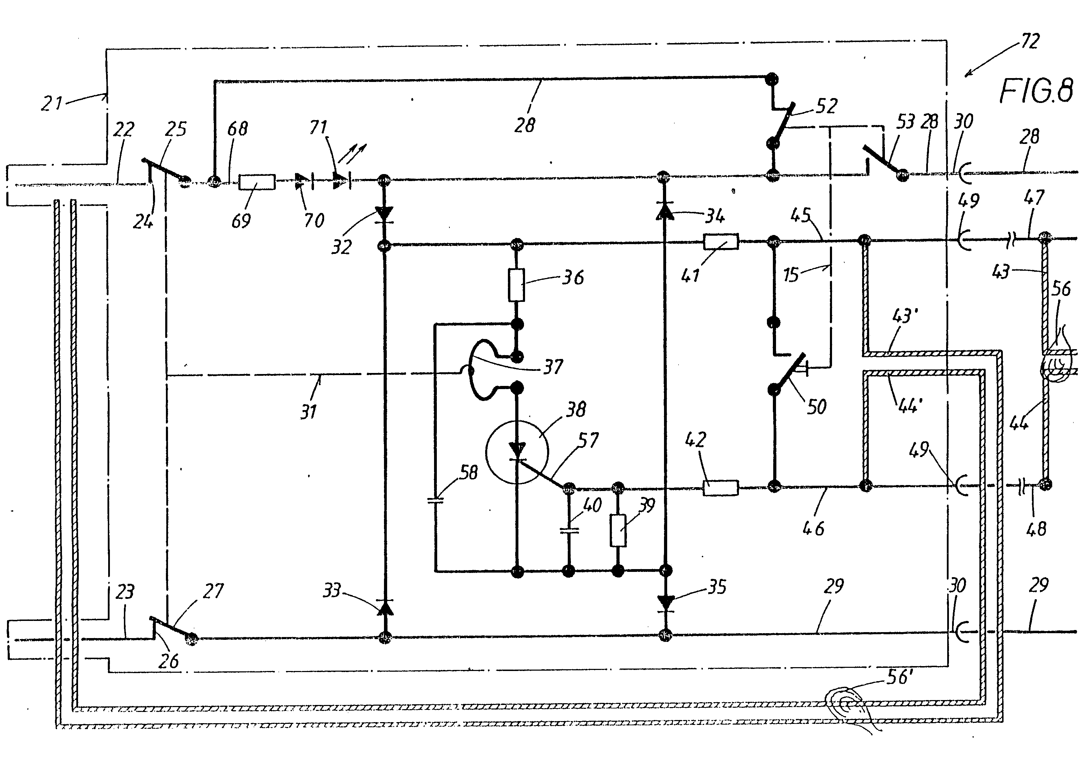

Ein weiterer parallel geschalterer Widerstand 39 und Kondensator 40 dienen der Absicherung gegen Störimpulse. Über zwei hochohmige Widerstände 41, 42 sind Eingangsleitungen 45, 46 angeschlossen, die zum Anschluß von Doppelleitungen 43, 44 bzw. 43', 44' von auf eindringende Flüssigkeit ansprechenden Sensoren angeschlossen sind. Die Doppelleitung, 43, 44, ist an den bei bestimmungsgemäßer Handhabung des Geräts unzugänglichen Randbereichen von Gehäuseöffnungen und Gehäusefugen im elektrischen Verbraucher angeordnet und verändert bei Benetzung mit eindringender Flüssigkeit, wie Wasser, seinen elektrischen Scheinwiderstand. Zur Verbindung dieser verbraucherseitigen Sensorleitungen 43, 44 sind die Eingansleitungen 45, 46 im Bereich der Steckaufnahmen 11 der Anschlußgeräte 10 mit in Fig. 1 und 2 nicht näher gezeigten, aber aus Fig. 8 erkennbaren Kontaktstellen 49 versehen, die über angekuppelte Verbindungsleitungen 47, 48 zu diesen Sensorleitungen 43, 44 im Verbraucher führen. Diese Verbindungsleitungen 47, 48 sind zweckmäßigerweise als vierpolige Gesamtleitung mit den hinter den Aufnahmekontakten 30 weitergeführten Versorgungsleitungen 28, 29 kombiniert. Eine entsprechende Überwachung könnte auch im Bereich des Gehäuses 14 am Anschlußgerät 10 erfolgen, weshalb dort, in analoger Weise, an den normalerweise unzugänglichen inneren Randbereichen von Gehäuseöffnungen und Gehäusefugen ihrerseits Doppelleitungen 43', 44' vorgesehen sind, die auch an den Eingangsleitungen 45, 46 der Schaltung angeschlossen sind. An den beiden Eingangsleitungen 45, 46 ist schließlich noch ein normalerweise immer geöffneter Testschalter 50 angeordnet, der von der am Gehäuse 14 befindlichen Handhabe 15 aus in einer bestimmten Arbeitsposition mitbetätigbar ist.

Im Gebrauchsfall des Anschlußgeräts 10 ist die Handhabe 15 in eine Arbeitsposition « EIN » gebracht, wofür die oberste Gegenmarke 17 von Fig. 3 maßgeblich ist. In dieser obersten Schiebestellung der Handhabe 15 sind im zugehörigen Schaltergehäuse 51 von Fig. 4 ein aus Fig. 8 ersichtlicher Hauptkontakt 52 und Gerätekontakt 53 leitend verbunden. Zugleich ist aber die Tasthandhabe am Testschalter 50 verriegelt. Dies ist durch eine geeignete Kopplung und Anordnung dieser Elemente bewerkstelligt. Im Ausführungsbeispiel von Fig. 4 ist dies dadurch erreicht, daß der mit seinen Kontakten normalerweise in Trennlage befindliche Testschalter 50 mit seinem Tastbetätiger 55, im Gehäuse 14 unzugänglich, in definiertem Abstand zu einer Schulter 54 der Schiebehandhabe 15 angeordnet ist. Dadurch ist der Thyristor 38 in der Schutzschaltung gesperrt. Der elektrische Verbraucher kann normal betrieben werden.

Kommt nun im Gebrauchsfall das Gehäuse des elektrischen Verbrauchers mit leitender Flüssigkeit in Berührung, welche, wie in Fig. 8 durch den Tropfen 56 angedeutet, die Doppelleitung 43, 44 benetzt, so gelangt über die Sensordoppelleitung 43, 44 Spannung an die Gate-Leitung 57 des Thyristors 38 und zündet ihn. Dann fließt ein maximaler Strom von z. B. 2 Ampère durch die Diagonale der Brückenschaltung zwischen den beiden Versorgungsleitungen 28, 29 und bringt den Draht 37 zum Schmelzen. Durch die gestrichelt in Fig. 8 angedeutete Wirkverbindung des den Schmelzdraht 37 umfassenden selbstöffnenden mechanischen Schalters 31 öffnen beide Kontakte 25, 27 nahezu augenblicklich, wodurch die Stromversorgung zum Verbraucher in beiden Versorgungsleitungen 28, 29 unterbrochen ist.

Die gleiche Schutzwirkung ergibt sich, wenn im Falle des am Anschlußgerät 10 befindlichen Sensors 43', 44' die durch den in Fig. 8 angedeuteten Tropfen 56' erkennbare leitende Verbindung sich ergibt.

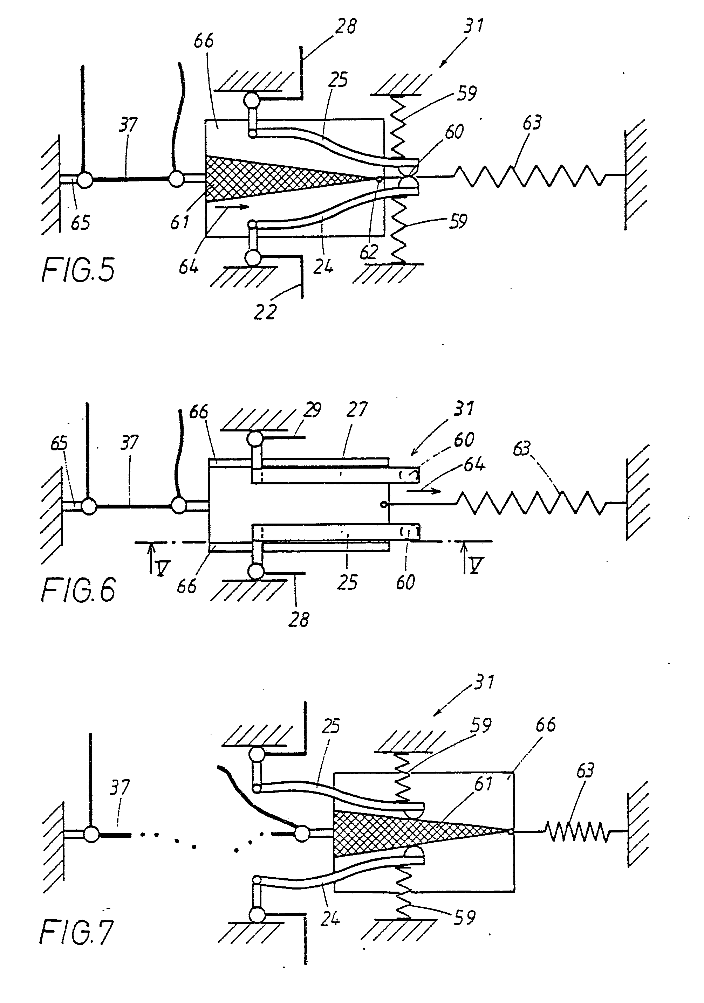

Die außerordentlich schnelle Abschaltung ergibt sich durch die besondere, aus den Fig. 5 bis 7 erkennbare Konstruktion des selbstöffnenden Schalters 31, der in seinen wesentlichen Bestandteilen dort nur schematisch dargestellt ist. Die mechanisch beweglichen Kontakte 24 bis 27 werden durch eine Federbelastung 59 gegeneinander gedrückt und dadurch in der aus Fig. 5 und 6 ersichtlichen Berührungslage gehalten. In Ausrichtung mit dem Berührungsbereich 60 der beiden Kontaktsätze 24, 25 bzw. 26, 27 ist der Bewegungsweg eines aus Isolationsmaterial bestehenden Trennkeils 61 mit seiner Keilspitze 62 angeordnet, wenn sich die Schutzschaltung in der aus Fig. 8 ersichtlichen Einschaltstellung befindet. Dabei ist zwar der Trennkeil 61 bestrebt, aufgrund einer von einer Feder 63 od. dgl. ausgehenden Kraftbelastung im Sinne des Bewegungspfeils 64 in den Berührungsbereich 60 der Kontakte 24 bis 27 getrieben zu werden, doch ist er daran durch den Schmelzdraht 37 gehindert, der ihn, der Kraftbelastung entgegen, zurückhält. Das eine Ende des Schmelzdrahts 37 ist am Trennkeil 61 befestigt, während sein anderes Ende einen festen Verankerungspunkt 65 besitzt. In dieser Berührungslage der Kontakte 24 bis 27 befindet sich der vorgespannte Trennkeil 61 in einer Ruhelage außerhalb des Berührungsbereichs 60 der Kontakte.

Wird nun ein Fehler vom Sensor 43, 44 bzw. 43', 44' gemeldet, der Thyristor 38 gezündet und der Schmelzdraht 37 gemäß Fig. 7 zerstört, so schnellt der Trennkeil 61 unter Entspannung der ihn belastenden Feder 63 in den Berührungsbereich 60 der Kontakte 24 bis 27 und unterbindet dadurch von vornherein einen zeitverzögernden Lichtbogen zwischen den sich öffnenden Kontakten 24, 25 bzw. 26, 27. Durch den Isolationswerkstoff des Trennkeils 61 werden die Kontakte von vornherein gegeneinander abgeschirmt. Es tritt praktisch augenblicklich eine wirksame Trennlage der aus Fig. 7 ersichtlichen beweglichen Kontakte 24, 25 gegen deren Federbelastung 59 ein.

Um diese Einfahrbewegung des Trennkeils 61 in den Berührungsbereich 60 zu lenken, können Leitflächen vorgesehen sein. Diese sind im vorliegenden Fall durch einfache Seitenflansche 66 am Trennkeil 61 angedeutet, die längs der Kontakte 24 bis 27 gleiten können. Es können natürlich auch andere Führungsmittel, wie Gleitschienen vorgesehen sein. In Trennlage dieser Kontakte 24 bis 27 sind die zum Verbraucher weiterführenden Versorgungsleitungen 28, 29 stromlos gemacht. Ein elektrischer Unfall ist damit ausgeschlossen.

Ausweislich der Fig. 3 und 4 kann der Schalter 51 auch noch die Arbeitsposition « AUS » bei der mittleren Gegenmarke 18 aufweisen, in welcher die Netzspannung zum elektrischen Verbraucher unterbrochen ist, selbst wenn er am Anschlußgerät 10 elektrisch angekuppelt bleibt. Es liegt dann die aus Fig. 8 ersichtliche Lage der Kontaktelemente normalerweise vor. Der Hauptkontakt 52 bleibt geschlossen, aber der Gerätekontakt 53 ist nun geöffnet und unterbricht damit die zugehörige Versorgungsleitung 28. Obwohl ein entsprechender Gerätekontakt auch in der anderen Versorgungsleitung 29 vorliegen und mit diesem gemeinsam wirksam werden könnte, bedarf es dieses Aufwands normalerweise nicht, denn schon bei der aus Fig. 8 ersichtlichen Schaltung ist ein elektrischer Unfall auch in dieser Schaltstellung wirksam verhindert. Kommt es nämlich bei den Sensor-Doppelleitungen 43, 44 bzw. 43', 44' zu einer Erniedrigung des Scheinwiderstands wegen eindringenden Wassers 56 bzw. 56', so tritt über den geschlossenen Hauptkontakt 52 die bereits beschriebene Zündung des Thyristors 38 und Abschmelzung des Drahts 37 ein, die den vorgespannten Schalter 31 in der geschilderten Weise öffnet.

Schließlich ist die Schiebehandhabe 15 in eine unterste Arbeitsposition « TEST » überführbar, die in Fig. 3 durch die unterste Gegenmarke 19 gekennzeichnet ist. Schon beim Übergang in diese Endlage wird zunächst außer dem bereits unterbrochenen Gerätekontakt 53 auch noch der Hauptkontakt 52 geöffnet. In der Endposition wird schließlich über die bereits erwähnte Schulter 54 der Tastbetätiger 55 des Testschalters 50 gegen seine in Fig. 4 angedeutete ihn normalerweise in unwirksame Position überführende Federspannung 67 zurückgedrückt und schließt den aus Fig. 8 ersichtlichen Kontakt zwischen den Eingangsleitungen 45, 46. Damit ist zwar die eine Versorgungsleitung 28 von der mit der anderen Versorgungsleitung 29 verbunden bleibenden Brückenschaltung der Dioden 32 bis 35 getrennt, doch gibt es, ausweislich der Fig. 8, eine dazu parallele Hilfsleitung 68, die von den Kontakten 24, 25 aus den oberen Brückenpunkt mit Spannung versorgt.

In diese Hilfsleitung 68 ist ein Begrenzungswiderstand 69, eine Schutzdiode 70 und eine Leuchtdiode 71 hintereinander geschaltet. Wird nun in weiterem Vollzug die Abwärtsbewegung der Schiebehandhabe 15 in die Arbeitsposition « TEST » der Tastbetätiger 55 voll eingedrückt und damit die beiden Eigangsleitungen 45, 46 verbunden, so zündet zwar wieder der Thyristor 38, doch ist der jetzt ihn und damit den Schmelzdraht 37 durchfließende Heizstrom durch den Begrenzungswiderstand 69 soweit erniedrigt, daß es zu keiner den Drahtwerkstoff schmelzenden Temperaturerhöhung kommt. Der Heizdraht 37 bleibt also in diesem Testfall unbeschädigt. Der Heizstrom ist aber von einer definierten Höhe, wenn die Bauteile der Schutzschaltung 72, insbesondere der Draht 37 und der Thyristor 38 in voller Funktionsfähigkeit sind, denn dann leuchtet die Diode (LED) 71 auf. Im vorliegenden Fall ist der Schalter 51 als Kombination des Tasters 50 mit den verschiedenen Haupt- und Gerätekontakten 52, 53 ausgebildet, wie erläutert wurde, doch wäre es möglich, diese Bauteile auch in anderer Weise miteinander zu kombinieren, z. B. in einem Gesamtschalter zusammenfassen oder aber in getrennten Schaltern vorsehen. Im letztgenannten Fall könnte zwar der Schiebebetätiger beispielsweise die Haupt- und Gerätekontakte 52, 53 schalten, aber nicht mehr mit dem Testschalter 50 zusammenwirken, sondern durch ein Schild dessen Tastbetätiger 55 für den Gerätebenutzer unzugänglich machen. Erst wenn die unterste Stellung des Schiebers erreicht wird, ist der Schild soweit wegbewegt, daß der darunter angeordnete Tastbetätiger 55 manuell zugänglich ist. Schließlich wäre es auch möglich durch Riegel od. dgl. den Tastbetätiger in den anderen Arbeitspositionen der Handhabe 15 zu blockieren.

Bedeutsam ist die oben geschilderte Schaltfolge der verschiedenen Kontakte, die der besseren Übersicht wegen in der nachfolgenden Tabelle nochmals wiedergegeben ist, wobei das Symbol (+) eine leitende Verbindung und das Symbol (—) die nichtleitende Verbindung in der jeweiligen Arbeitsposition der drei Schaltstellen anzeigt :

| Arbeitsposition der Handhabe 15 | Schaltstellen | | |
|---|---|---|---|
| | Hauptkontakt 52 | Gerätekontakt 53 | Testschalter 50 |
| "EIN" | (+) | (+) | (—) |
| "AUS" | (+) | (—) | (—) |
| "TEST" | (—) | (—) | (+) |

Anstelle des dargestellten selbstöffnenden Schalters 31 ließe sich auch ein Schalter mit Sprungfederkontakten verwenden, die durch Eigenspannung in Einschaltstellung der Schutzschaltung in Berührungslage vorgespannt sind aber bestrebt sind, nach Durchschmelzen eines Drahtes oder eines schmelzfähigen Werkstoffs in Trennlage aufgrund ihrer Sprungfederwirkung überzugehen.

Mit der Erfindung ist es möglich, eine äußerst kurze Zeit zum Auslösen der elektrischen Schaltung und zum vollständigen Öffnen des mechanischen Schalters zu erreichen, die in der Größenordnung von wenigen Millisekunden liegt. In dieser Zeit kann das Wasser nicht bis zu den übrigen stromführenden Teilen in dem gefährdeten elektrischen Verbraucher oder im Anschlußgerät selbst gelangen.

Gemäß Fig. 4 wird die Handhabe 15 durch eine Rückstellfeder 73 in ihrer « AUS »-Arbeitsposition gehalten. Läßt man die Handhabe 15 nach der Verschiebung in die Arbeitsposition « TEST » los, so bewegt sie sich von selbst wieder in die Ausgangsposition « AUS » zurück.

**0 144 660**

Bezugszeichenliste :

10 Mehrfachsteckleiste, Anschlußgerät
11 Steckaufnahme
12 Netzanschluß
13 Stecker
14 Gehäuse
15 Handhabe
16 Marke
17 Gegenmarke (EIN)
18 Gegenmarke (AUS)
19 Gegenmarke (TEST)
20 Kontroll-Lampe
21 Kapselung
22 Netzanschluß
23 Netzanschluß
24 Kontakt
25 Kontakt
26 Kontakt
27 Kontakt
28 Versorgungsleitung
29 Versorgungsleitung
30 Aufnahmekontakt
31 selbstöffnender mechanischer Schalter
32 Diode
33 Diode
34 Diode
35 Diode
36 Vorwiderstand
37 Schmelzdraht
38 Thyristor
39 Widerstand
40 Kondensator
41 Widerstand
42 Widerstand
43, 43' erste Doppelleitung
44, 44' zweite Doppelleitung
45 Eingangsleitung
46 Eingangsleitung
47 Verbindungsleitung
48 Verbindungsleitung
49 Kontaktstelle
50 Testschalter
51 Schaltergehäuse zu 15
52 Hauptkontakt
53 Gerätekontakt
54 Schulter an 15
55 Tastbetätiger von 50
56, 56' Tropfen
57 Gate-Leitung von 38
58 Schutzkondensator
59 Federbelastung
60 Berührungsbereich von 24 bis 27
61 Trennkeil
62 Keilspitze
63 Feder
64 Bewegungspfeil von 61
65 Verankerung von 37
66 Flansch
67 Federspannung
68 Hilfsleitung
69 Begrenzungswiderstand
70 Schutzdiode
71 Leuchtdiode (LED)
72 Zündschaltung
73 Rückstellfeder

# 0 144 660

**Patentansprüche**

1. Elektrisches Anschlußgerät (10) mit Versorgungsleitungen (28, 29) für elektrische Verbraucher, wie eine Steckdose, einen Mehrfachsteckanschluß, einen Anschlußverteiler, einen Zwischenstecker od. dgl. mit einem Schutzschalter (31), dessen mechanische Kontakte (24, 25, 26, 27) zwischen einer Ein- und Ausschaltstellung beweglich sind, mit einem Sensor (43, 44 ; 43', 44') zur Überwachung des Eindringens von Flüssigkeit in den Verbraucher, wobei der Sensor aus einem offenen, elektrischen Doppelleiter (43, 44 ; 43', 44') besteht, der bei der bestimmungsgemäßen Handhabung des Verbrauchers und ggf. des Anschlußgerätes in unzugänglichen Randbereichen von Gehäuseöffnungen und Gehäusefugen der zugehörigen Gehäuse (14) angeordnet ist und der bei Benetzung (56 ; 56') mit eindringender Flüssigkeit seinen elektrischen Scheinwiderstand verändert, und mit einer im Anschlußgerät enthaltenen Schutzschaltung, die das bleibende Öffnen der Kontakte (24, 25 ; 26, 27) des Schutzschalters (31) bewirkt, wenn das Eindringen von Flüssigkeit durch den Sensor erfaßt wird, dadurch gekennzeichnet, daß in der Einschaltstellung des Schutzschalters (31) dessen bewegliche Kontakte (24, 25 ; 26, 27) zwar stets einem vorgespannten, sie selbsttätig (63) in Ausschaltstellung überführenden Triebmittel (61) ausgesetzt sind, diese Bewegung (64) aber durch einen schmelzfähigen Werkstoff (37) gehemmt ist, wobei der schmelzfähige Werkstoff im Bereich eines elektrisch aufheizbaren Gliedes (Heizgliedes 37) einer an die Versorgungsleitungen (28, 29) angeschlossenen, einen Halbleiterschalter (38) aufweisenden Zündschaltung angeordnet ist, an deren Eingang (45, 46) der Doppelleiter (43, 44 ; 43', 44') liegt und welche den Halbleiterschalter (38) dann zündet, wenn der elektrische Scheinwiderstand des Doppelleiters (43, 44 ; 43', 44') einen bestimmten, auf eine Flüssigkeitsbenetzung zurückzuführenden Grenzwert unterschreitet, wobei am Eingang (45, 46) der Zündschaltung ein Testschalter (50) mit einem damit gekoppelten, in der Versorgungsleitung (28) liegenden Hauptschalter (52) vorgesehen ist, und wobei im Testfall der Testschalter (50) zwar den Eingang (45, 46) der Zündschaltung kurzschließt, vorausgehend aber der Hauptschalter (52) die zur Zündschaltung und ggf. zum elektrischen Verbraucher führende Versorgungsleitung unterbricht und Begrenzungswiderstände (69) in einer parallel zum Hauptschalter (52) führenden Hilfsleitung (68) eingeschaltet läßt, wobei die Begrenzungswiderstände (69) den elektrischen Heizstrom zur Erwärmung des schmelzfähigen Werkstoffes (37) soweit reduzieren, daß die Werkstofftemperatur unterhalb ihrer Schmelztemperatur verbleibt, und nur der bei voller Funktionsfähigkeit der elektrischen Bauelemente (69, 37, 38, 41, 42, 32, 33, 34, 35) der Zündschaltung in definierter Höhe anfallende Heizstrom eine Kontrollanzeige (71) wirksam setzt.

2. Anschlußgerät nach Anspruch 1, dadurch gekennzeichnet, daß das Triebmittel des Schutzschalters (31) aus einer Federvorspannung der beweglichen Kontakte (24, 25, 26, 27) besteht, welche bei Auslösung die Kontakte in Ausschaltstellung treibt.

3. Anschlußgerät nach Anspruch 1, dadurch gekennzeichnet, daß die Kontakte (24, 25, 26, 27) des Schutzschalters (31) im Berührungssinne gegeneinander federbelastet (59) sind und das Triebmittel aus einem in den Berührungsbereich (60) zwischen den Kontakten (24, 25, 26, 27) einfahrbaren Trennkeil (61) aus Isolationsmaterial besteht, der zwar im Sinne dieser Einfahrbewegung (64) kraftbelastet ist, aber — in Einschaltstellung des Schutzschalters (31) — durch den schmelzfähigen Werkstoff (37) in einer Ruhelage außerhalb des Berührungsbereiches (60) festgehalten ist.

4. Anschlußgerät nach einem oder mehreren der Ansprüche 1 bis 3, dadurch gekennzeichnet, daß der schmelzfähige Werkstoff ein den elektrischen Strom leitenden Draht (37) ist, der das elektrische Heizglied in der Zündschaltung (72) selbst bildet und im Falle der Zündung über seine Schmelztemperatur hinaus erwärmbar ist.

5. Anschlußgerät nach einem oder mehreren der Ansprüche 1 bis 3, dadurch gekennzeichnet, daß der schmelzfähige Werkstoff ein Kleber ist, der das Triebmittel mit dem elektrischen Heizglied verbindet und mittelbar durch den Stromfluß im Heizglied über seine Schmelztemperatur hinaus erwärmbar ist.

**Claims**

1. An electrical connection device (10) having supply lines (28, 29) for electrical loads such as a plug socket, a multiple plug connection, a connection distributor fitment, an adaptor plug or the like, comprising an automatic circuit breaker (31) whose mechanical contacts (24, 25, 26, 27) are movable between closed and open positions, a sensor (43, 44 ; 43', 44') for monitoring the penetration of liquid into the load, wherein the sensor comprises an open electrical double conductor (43, 44 ; 43', 44') which, when the load and possibly the connecting device are handled as directed, is arranged in inaccessible edge regions of openings and joins of the associated housing (14) and which changes its electrical impedance upon wetting (56 ; 56') with liquid which has penetrated, and a protective circuit which is contained in the connecting device and which causes permanent opening of the contacts (24, 25 ; 26, 27) of the automatic circuit breaker (31) when the penetration of liquid is detected by the sensor, characterised in that in the closed position of the automatic circuit breaker (31) whose movable contacts (24, 25 ; 26, 27) are admittedly always subjected to a biased driving means (61) for moving them automaticaly (63) into the open position, said movement (64) is prevented by a fusible material (37), wherein the fusible material is

**0 144 660**

arranged in the region of an electrically heatable member (heating member 37) of a firing circuit which is connected to the supply lines (28, 29) and which has a semiconductor switch (38) and to the input (45, 46) of which the double conductor (43, 44 ; 43', 44') is connected and which fires the semiconductor switch (38) when the electrical impedance of the double conductor (43, 44 ; 43', 44') falls below a given limit value which is to be attributed to wetting by a liquid, wherein provided at the input (45, 46) of the firing circuit is a test switch (50) with a main switch (52) which is coupled thereto and which is disposed in the supply line (28), and wherein in the case of a test the test switch (50) may short-circuit the input (45, 46) of the firing circuit, but the main switch (52) precedingly interrupts the supply line leading to the firing circuit and possibly to the electrical load and causes limiting resistors (69) to be cut in, in an auxiliary line (68) going in parallel to the main switch (52), wherein the limiting resistors (69) reduce the electrical heating current for heating the fusible material (37) to such an extent that the material temperature remains below its melting temperature, and only the heating current which occurs upon full operability of the electrical components (69, 37, 38, 41, 42, 32, 33, 34, 35) of the firing circuit, sets a monitoring display (71) in operation.

2. A connecting device according to claim 1 characterised in that the drive means of the automatic circuit breaker (31) comprises spring biasing for the movable contacts (24, 25, 26, 27), which drives the contacts into the open position in the triggered condition.

3. A connecting device according to claim 1 characterised in that the contacts (24, 25, 26, 27) of the automatic circuit breaker (31) are spring-loaded (59) towards each other in the direction of contact, and the drive means comprises a separating wedge (61) of insulating material, which can be introduced into the region of contact (60) between the contacts (24, 25, 26, 27) and which, although being force-loaded in the direction of said introduction movement (64), is retained — in the closed position of the automatic circuit breaker (31) — in a rest position outside the contact region (60) by the fusible material (37).

4. A connecting device according to one or more of claims 1 to 3 characterised in that the fusible material is a wire (37) which carries the electrical current and which forms the electrical heating member in the firing circuit (72) itself and which in the event of firing can be heated beyond its melting temperature.

5. A connecting device according to one or more of claims 1 to 3 characterised in that the fusible material is an adhesive which joins the drive means to the electrical heating member and which can be heated beyond its melting temperature indirectly by the flow of current in the heating member.

**Revendications**

1. Appareil de branchement (10) électrique comportant des lignes (28, 29) d'alimentation, destiné à des appareils utilisant l'électricité, tel qu'une prise courant, une prise multiple, un répartiteur de branchements, un adaptateur ou des organes similaires, doté d'un interrupteur de protection (31) dont les contacts mobiles (24, 25, 26, 27) peuvent se déplacer entre une position de fermeture et une position d'ouverture, doté d'un capteur (43, 44 ; 43', 44') destiné à la surveillance de l'entrée de liquide dans l'appareil utilisateur, le capteur étant constitué par un double conducteur électrique ouvert (43, 44 ; 43', 44') qui est disposé dans le cas d'un emploi normal de l'appareil utilisateur et, le cas échéant, de l'appareil de branchement dans des zones marginales inaccessibles d'ouvertures et de joints du boîtier ou corps (14) considéré et qui, lorsqu'il est mouillé (56, 56') par un liquide en train de pénétrer, change de résistance apparente, et doté d'un circuit de protection contenu dans l'appareil de branchement, qui provoque l'ouverture durable des contacts (24, 25, 26, 27) de l'interrupteur de protection (31) lorsque l'entrée de liquide est détectée par le capteur ; caractérisé par le fait que, dans la position de fermeture de l'interrupteur (31) de protection dont les contacts mobiles (24, 25 ; 26, 27) sont soumis en permanence à un moyen (61) d'entraînement précontraint, qui l'amène automatiquement (63) en position d'ouverture, ce mouvement étant cependant empêché grâce à un matériau fusible (37), le matériau fusible étant disposé dans la zone d'un élément de chauffage électrique (élément chauffant 37) d'un circuit d'amorçage branché sur les lignes d'alimentation (28, 29), présentant un interrupteur à semi-conducteur (38), à l'entrée (45, 46) duquel circuit se trouve le double conducteur (43, 44 ; 43', 44') et qui amorce l'interrupteur (38) à semi-conducteur lorsque la résistance apparente du double conducteur (43, 44 ; 43', 44') franchit vers le bas une valeur limite déterminée imputable au fait qu'il est mouillé par un liquide, un interrupteur d'essai (50) étant prévu à l'entrée (45, 46) du circuit d'amorçage, cet interrupteur d'essai comportant un interrupteur principal (52) couplé avec lui, situé dans la ligne d'alimentation (28), et lors d'un essai, l'interrupteur d'essai (50) court-circuitant l'entrée (45, 46) du circuit d'amorçage, mais l'interrupteur principal (52) interrompant précédemment la ligne d'alimentation conduisant au circuit d'amorçage et, le cas échéant, à l'appareil utilisant l'électricité et laissant branchées des résistances de limitation (69) situées dans une ligne auxiliaire (68) conduisant en parallèle à l'interrupteur principal (52), les résistances de limitation (69) réduisant le courant électrique de chauffage destiné à chauffer le matériau (37) fusible de telle sorte que la température du matériau reste en dessous de sa température de fusion, et le courant de chauffage qui ne s'élève à un certain niveau que dans le cas d'une complète capacité de fonctionnement des composants électriques (69, 37, 38, 41, 42, 32, 33, 34, 35) du circuit d'amorçage, mettant en fonctionnement un signal de contrôle (71).

8

2. Appareil de branchement selon la revendication 1, caractérisé par le fait que le moyen d'entraînement de l'interrupteur de protection (31) est constitué par la précontrainte par ressort des contacts mobiles (24, 25, 26, 27) qui, en cas de déclenchement, met les contacts en position d'ouverture.

3. Appareil de branchement selon la revendication 1, caractérisé par le fait que les contacts (24, 25, 26, 27) de l'interrupteur (31) de protection sont sous contrainte de ressort (59) les uns contre les autres dans le sens de contact et que le moyen d'entraînement est constitué par un coin de séparation (61) en matériau isolant qui peut s'introduire entre les contacts (24, 25, 26, 27) dans la zone de contact (60), coin qui est sous la contrainte d'une force dans le sens 64 du mouvement d'introduction mais qui est retenu — quand l'interrupteur de protection (31) est en position de fermeture — par le matériau fusible (37) dans une position de repos située en dehors de la zone de contact (60).

4. Appareil de branchement selon une ou plusieurs des revendications 1 à 3, caractérisé par le fait que le matériau fusible est un fil conducteur (37) du courant électrique, qui forme lui-même l'élément chauffant du circuit d'amorçage (72) et peut être chauffé en cas d'amorçage au-delà de sa température de fusion.

5. Appareil de branchement selon une ou plusieurs des revendications 1 à 3, caractérisé par le fait que le matériau fusible est une colle qui relie le moyen d'entraînement à l'élément chauffant électrique et qui peut être chauffé au-dessus de sa température de fusion indirectement grâce au courant qui passe dans l'élément chauffant.

**FIG.1**

**FIG.2**

**FIG.3**

EIN

AUS

TEST

**FIG.4**

FIG.5

FIG.6

FIG.7

FIG.8

0 144 660